# EUROPEAN PATENT APPLICATION

(11) **EP 1 493 716 A1**
(43) Date of publication of application: **05.01.2005**
(21) Application number: 03712848.5
(22) Date of filing: 24.03.2003
(51) Int. Cl.: C02F 1/56, C02F 1/58

(54) **METHOD OF WASTEWATER TREATMENT**

(30) Priority: 25.03.2002 JP 2002082356
(71) Applicant: MITSUBISHI GAS CHEMICAL COMPANY, INC., Chiyoda-ku, Tokyo 100-8324 (JP)
(72) Inventor: YOKOKAWA, Tetsuya, Yokohama-shi, Kanagawa 235-0021 (JP)
(74) Representative: Gille Hrabal Struck Neidlein Prop Roos
(86) International application number: PCT/JP2003/003518
(87) International publication number: WO 2003/080519

(57) **Abstract**

In the wastewater treatment method of the present invention, a wastewater containing fluoride ion and/or phosphate ion is added with a calcium-containing compound, and then added with a film-forming agent and a complexing agent. The film-forming agent comprises a water-soluble organic polyelectrolyte and an anionic polymeric flocculant. The water-soluble organic polyelectrolyte is constituted by units derived from at least one organic acid selected from the group consisting of mannuronic acid, glucuronic acid and cellulose glycolic acid. The complexing agent comprises a cationic polymeric flocculant solely, or a water-soluble aluminum salt and the cationic polymeric flocculant. The wastewater treatment method of the present invention is performed in inexpensive facilities, and surely meets strict effluent standards to fluoride ion and phosphate ion.

## Description

### TECHNICAL FIELD

The present invention relates to a method for treating a wastewater containing fluoride ion and/or phosphate ion, and more particularly, to a method of an advanced treatment of a wastewater from semiconductor production apparatuses, desulfurizers of thermal power plants, stainless steel production processes, glass production processes, etc.

### BACKGROUND ARTS

In electronic industries for the production of semiconductors such as LSI, various chemicals have been used in the production processes. Therefore, the wastewater from the production processes must be treated to remove these chemicals. For instance, the wastewater often contains fluorine derived from hydrofluoric acid that is frequently used as an etchant for silicon wafers. Therefore, the fluorine must be removed from the wastewater. The current effluent standard for fluorine is 15 mg/L or lower. However, many self-governing bodies are going to set a much stricter effluent standard, likely to 8 mg/L or lower.

The treatment of fluorine is generally made by the addition of a calcium ion-generating substance such as calcium chloride and slaked lime thereby to allow fluorine to crystallize out as calcium fluoride for separation. The crystallized calcium fluoride is usually flocculated and precipitated with an inorganic flocculant such as an aluminum-based flocculant to ensure solid-liquid separation and remove fluorine remaining in the wastewater. However, the removal of fluorine by the sole use of calcium ion is usually insufficient because of influence of co-existing substances in the wastewater such as phosphate ion. Therefore, a large amount of inorganic flocculant is usually added to the wastewater to reduce the fluorine concentration by utilizing its adsorbing action.

Also, there has been proposed a method of removing fluorine using a reaction column packed with granular calcium carbonate such as calcite (Japanese Patent Application Laid-Open No. 5-170435).

In the proposed method, the granular calcium carbonate is dissolved away when the wastewater has a low pH. When the wastewater has a high alkalinity due to ammonia, etc. therein, the pH becomes high and the elution of calcium ion from the granular calcium carbonate is inhibited, thereby making the reaction between calcium ion and fluorine insufficient. Therefore, the proposed method needs a control system for accurately measuring and controlling the acidity and the fluoride ion concentration of the wastewater.

At present, in the conventional techniques including the modified techniques mentioned above, the fluorine concentration in the wastewater attainable after treatment is limited to 3 to 4 ppm at lowest.

In electronic industries, phosphoric acid is frequently used in the production processes. The phosphoric acid is used, for example, as an etchant for silicon nitride. Thus, the facilities for wastewater treatment are required to treat acidic wastewater containing phosphoric acid in addition to hydrofluoric acid. However, in the fluorine treatment based on the formation of calcium fluoride, phosphate ion tends to inhibit the formation of calcium fluoride, as mentioned above. Therefore, it is required to minimize the influence of phosphate ion to effectively remove fluorine from the wastewater.

In addition, phosphate ion has a problem of eutrophication especially in closed water areas, and therefore, its discharge has come to be increasingly controlled. The current effluent standard for phosphate ion is 1 ppm or lower. However, in view of the problem of eutrophication, a more strict effluent standard as low as 0.1 ppm is now under review.

A wastewater containing fluorine is also discharged from stainless steel production processes and glass production processes because a chemical polishing solution containing fluorine is used. Further, a wastewater from an exhaust gas desulfurizer of coal thermal power plants also contains fluoride ion and phosphate ion.

Fluoride ion contained in these wastewater are generally removed, as mentioned above, as calcium fluoride formed by the addition of calcium ion. Since calcium fluoride to be formed tends to be extremely fine particle, it is required to flocculate the formed calcium fluoride for precipitation and separation by an organic or inorganic flocculant. However, since the solubility product of calcium fluoride is 3.45 x 10⁻¹¹, it is required for reducing the fluoride ion concentration in wastewater to several ppm that the fine particles of calcium fluoride is surrounded by an aggregating filtration film thereby to completely capture the fine particles, while preventing calcium fluoride from being dissociated into fluoride ion by keeping the calcium ion concentration at an extremely high level. However, a method meeting the requirements has not yet been developed. Therefore, there has been proposed at present a method in which dissociated fluoride ion is adsorbed onto ion-exchange resin as a second best method.

### DISCLOSURE OF THE INVENTION

In view of the above circumstances, an object of the present invention is to provide a method for treating a wastewater containing fluoride ion and/or phosphate ion which can be performed in inexpensive facilities and surely meets strict effluent standards.

As a result of extensive study in view of the above object, the inventor has found that the concentration of fluoride ion and/or phosphate ion of a wastewater can be surely reduced to about 1 µg/L in inexpensive facilities without using expensive ion exchange resins by a method comprising, after adding a calcium-containing compound to a wastewater containing fluoride ion and/or phosphate ion, (A) adding, as a film-forming agent, a water-soluble organic polyelectrolyte and an anionic polymeric flocculant, the water-soluble organic polyelectrolyte being constituted by units derived from at least one organic acid selected from the group consisting of mannuronic acid, glucuronic acid and cellulose glycolic acid; and then (B) adding a cationic polymeric flocculant solely, or sequentially or simultaneously adding a water-soluble aluminum salt and the cationic polymeric flocculant, thereby fixing fluoride ion and/or phosphate ion as calcium salts and immobilizing dissociated fluoride ion and/or phosphate ion as complexes onto the film.

Further, the inventor has found that the amounts of the agents A and B to be used can be reduced and also the amount of sludge to be produced can be reduced by adding the calcium-containing compound to the wastewater containing fluoride ion and/or phosphate ion, and adding, after removing the resultant precipitate, the agents A and B. The present invention has been accomplished on the basis of these findings.

Thus, the present invention provides the following wastewater treatment methods.
1. A method for treating a wastewater containing fluoride ion and/or phosphate ion, comprising:
   adding a calcium-containing compound to the wastewater;
   adding (A) a film-forming agent comprising a water-soluble organic polyelectrolyte and an anionic polymeric flocculant to the wastewater, the water-soluble organic polyelectrolyte being constituted by units derived from at least one organic acid selected from the group consisting of mannuronic acid, glucuronic acid and cellulose glycolic acid; and
   adding, as a complexing agent, (B) a cationic polymeric flocculant solely, or a water-soluble aluminum salt and the cationic polymeric flocculant sequentially or simultaneously to the wastewater.
2. A method for treating a wastewater containing fluoride ion and/or phosphate ion, comprising:
   adding a calcium-containing compound to the wastewater to form a precipitate;
   removing the precipitate from the wastewater;
   adding (A) a film-forming agent comprising a water-soluble organic polyelectrolyte and an anionic polymeric flocculant to the wastewater, the water-soluble organic polyelectrolyte being constituted by units derived from at least one organic acid selected from the group consisting of mannuronic acid, glucuronic acid and cellulose glycolic acid; and
   adding, as a complexing agent, (B) a cationic polymeric flocculant solely, or a water-soluble aluminum salt and the cationic polymeric flocculant sequentially or simultaneously to the wastewater.
3. The method of the above aspect 1 or 2, wherein after adding the water-soluble aluminum salt solely, the cationic polymeric flocculant is added to the wastewater.
4. The method of the above aspect 1 or 2, wherein after mixing the water-soluble aluminum salt and the cationic polymeric flocculant in advance, the resultant mixture is then added to the wastewater.
5. The method of the above aspect 1 or 2, wherein the anionic polymeric flocculant to be used as the film-forming agent A is a polymer comprising constitutional units represented by the following formulae I, II and III: 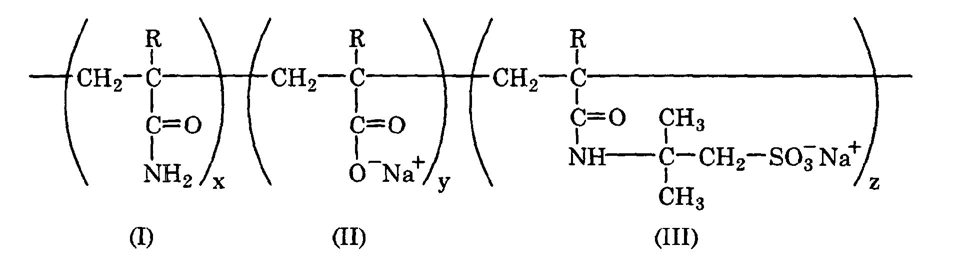 wherein x:y:z is 50:40:10 to 0:100:0 and R is hydrogen or methyl group.
6. The method of the above aspect 1 or 2, wherein the cationic polymeric flocculant to be used as the complexing agent B is a polymer comprising constitutional units represented by the following formulae IV and V: 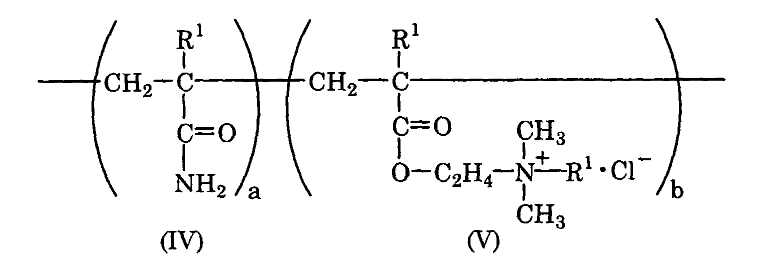
wherein a:b is 50:50 to 0:100 and R¹ is hydrogen or methyl group.

### PREFERRED EMBODIMENT TO CARRY OUT THE INVENTION

The method for treating a wastewater containing fluoride ion and/or phosphate ion according to the present invention is applicable to any wastewater without particular limitations. The wastewater referred to herein may include, as mentioned above, the wastewater from semiconductor production apparatuses, the wastewater from desulfurizers of thermal power plants, the wastewater from stainless steel production processes or glass production processes using a chemical polishing solution, and the wastewater from activated sludge equipment and household.

In the method of the present invention, the calcium-containing compound is first added to the wastewater to convert the fluoride ion and/or phosphate ion into calcium salts thereof. The conversion into the calcium salts may be conducted by known methods using calcium chloride, slaked lime, etc. In the salt formation step using the calcium-containing compound, the pH of wastewater is preferably 7 or higher and more preferably 9 or higher. The addition amount of the calcium-containing compound varies depending upon the fluoride ion concentration and/or the phosphate ion concentration, and is usually 0.01 to 2 parts by weight based on 100 parts by weight of the wastewater.

By the above treatment, the fluoride ion and/or phosphate ion is converted into sparingly soluble calcium fluoride and/or calcium phosphate. The greater part of the calcium salts remains insoluble. However, since the calcium salts have solubility products, fluoride ion or phosphate ion are dissociated at a concentration of several ppm corresponding to their equilibrium ion concentrations. For example, the solubility product of calcium fluoride (CaF₂) at 25°C shows that fluoride ion necessarily remains in a concentration of 8 ppm.

In the calcium salt formation step in the method of the present invention, the resultant calcium salts and the aqueous solution surrounding the salts are separated from each other by a barrier film, and the dissociated fluoride ion and/or phosphate ion are constrained within the barrier film so as not to move into the aqueous solution outside the barrier film. The aqueous solution constrained inside the barrier film shows a fluoride ion concentration and/or a phosphate ion concentration based on their ion products. However, the fluoride ion and/or phosphate ion generated inside the barrier film by the dissociation of the sparingly soluble calcium salts are captured by the aluminum ion adsorption film, and therefore, inhibited from leaking outside the barrier film. As a result, the fluoride ion concentration and/or the phosphate ion concentration of the aqueous solution outside the barrier film are kept at low levels.

Namely, in the method of the present invention, after the calcium-containing compound is first added to the wastewater containing fluoride ion and/or phosphate ion to form sparingly soluble calcium salts, the agent A (film-forming agent) comprising the film-forming component and the anionic polymeric flocculant is added to the wastewater to constrain fluoride ion and/or phosphate ion dissociated from the sparingly soluble calcium salts inside the resultant film. Thereafter, as the agent B (complexing agent), the water-soluble aluminum salt and the cationic polymeric flocculant are preferably added sequentially or simultaneously thereby to form an aluminum ion adsorption film. The water-permeable film having immobilized aluminum ions serves for trapping fluoride ion and/or phosphate ion which are dissociated from the calcium salt agglomerates present inside the film. Thus, the fluoride ion concentration and/or the phosphate ion concentration of the wastewater outside the water-permeable film can be extremely lowered to ensure the advance treatment of the wastewater.

Examples of the film-forming component used in the present invention include water-soluble organic polyelectrolytes such as sodium alginate and a sodium salt of carboxymethyl cellulose, which are produced from an organic polyelectrolyte constituted by units derived from at least one organic acid selected from the group consisting of mannuronic acid, glucuronic acid and cellulose glycolic acid by replacing hydrogen atoms of its carboxyl groups with sodium.

When a water-soluble aluminum salt such as aluminum sulfate and aluminum polychloride is added to the water-soluble organic polyelectrolyte, the sodium salt is replaced by the aluminum salt, this changing the solubilized water-soluble organic polyelectrolyte such as sodium alginate insoluble and causing the insolubilized polyelectrolyte to shrink to form the film. The film thus formed contains immobilized aluminum ions. Therefore, even if fluoride ion and/or phosphate ion are dissociated from the sparingly soluble calcium salts such as calcium fluoride and calcium phosphate which are constrained inside the film, the immobilized aluminum ions and free sodium ions react with the dissociated ions to form insoluble complex salts represented by Na₃AlF₆.

In order to prevent the insoluble complex salts from leaking out of the film, it is effective to densify the film by agglomerating ultrafine fluorine complex particles passing through the film so as to be adsorbed on the film. For this purpose, there may be used the following anionic polymeric flocculant and cationic polymeric flocculant.

The anionic polymeric flocculant used as the film-forming agent A together with the film-forming component is a polymer comprising the constitutional units represented by the following formulae I, II and III: 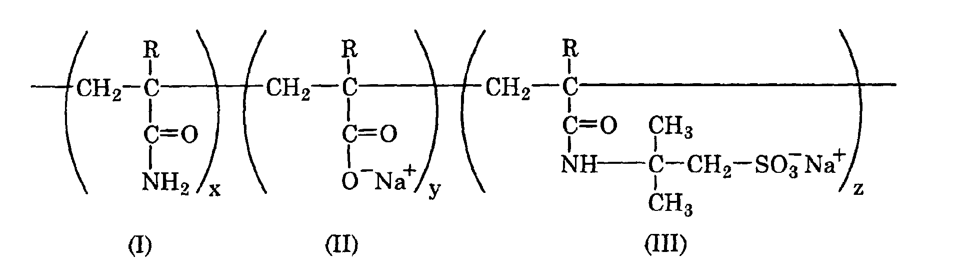 wherein x:y:z is 50:40:10 to 0:100:0 and R is hydrogen or methyl group.

The anionic polymeric flocculant may be commercially available as TA-24-1, TA-24-2, TA-24-3, A-117 and A-118, all from Toa Gosei Co., Ltd.

The cationic polymeric flocculant used in the present invention is a polymer comprising the constitutional units represented by the following formulae IV and V: 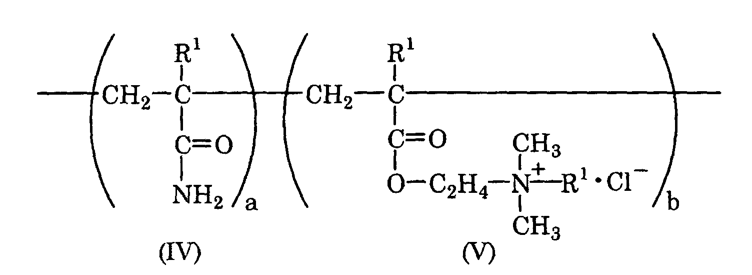 wherein a:b is 50:50 to 0:100 and R¹ is hydrogen or methyl group.

The cationic polymeric flocculant may be commercially available as C-508 for acrylic flocculant and C-303H for methacrylic flocculant, all from Toa Gosei Co., Ltd.

In the agent A (film-forming agent), the weight ratio of the film-forming component to the anionic polymeric flocculant is 1:0.2 to 1:5. The amount of the film-forming agent A to be added varies depending upon the fluoride ion concentration and the phosphate ion concentration, and is usually 1 x 10⁻⁴ to 1 x 10⁻² part by weight based on 100 parts by weight of the wastewater. The film-forming agent A may be added in the form of a 0.1 to 0.5% by weight aqueous solution, or may be directly added to the wastewater.

As for the agent B (complexing agent), the cationic polymeric flocculant may be solely used, or the combination of a water-soluble aluminum salt and the cationic polymeric flocculant may be used. When used combinedly, the water-soluble aluminum salt may be first added solely, followed by the addition of the cationic polymeric flocculant. Alternatively, the water-soluble aluminum salt and the cationic polymeric flocculant are mixed in advance, and then added to the wastewater. The amounts of the water-soluble aluminum salt (if used) and the cationic polymeric flocculant vary depending upon the fluoride ion concentration and the phosphate ion concentration, and may be suitably selected from the following ranges.

When the cationic polymeric flocculant is solely used as the agent B, the amount to be added is 1 x 10⁻⁴ to 1 x 10⁻² part by weight based on 100 parts by weight of the wastewater to be treated. The cationic polymeric flocculant may be added in the form of a 0.1 to 0.5% by weight aqueous solution, or may be directly added to the wastewater.

When the water-soluble aluminum salt is first added and the cationic polymeric flocculant is then added to the wastewater, the amount to be added is 0.01 to 0.5 part by weight for the water-soluble aluminum salt and 0.0001 to 0.01 part by weight for the cationic polymeric flocculant, each based on 100 parts by weight of the wastewater to be treated. The water-soluble aluminum salt and the cationic polymeric flocculant may be added in the form of a 1 to 20% by weight aqueous solution and a 0.1 to 0.5% by weight aqueous solution, respectively, or may be directly added to the wastewater.

When a mixture prepared in advance is added to the wastewater, the weight ratio of the water-soluble aluminum salt to the cationic polymeric flocculant is 1:0.01 to 1:0.1. The amount of the agent B (mixture) is 0.01 to 0.5 part by weight based on 100 parts by weight of the wastewater to be treated. The mixture may be added in the form of a 1 to 10% by weight aqueous solution, or may be directly added to the wastewater.

In the present invention, by using the anionic and cationic polymeric flocculants in well-balanced amounts, for example, by using the anionic polymeric flocculant and the cationic polymeric flocculant in a weight ratio of 1:0.5 to 1:2, the film can be densified to ensure the complete trapping of the dissociated fluoride ion and/or phosphate ion.

According to the method of the present invention, it has been confirmed that the fluoride ion concentration and/or the phosphate ion concentration of the wastewater can be reduced to as low as about 1 µg/L. Thus, the fluoride ion concentration and/or the phosphate ion concentration of the wastewater is surely reduced to the aimed level in inexpensive facilities without using specific means such as ion exchange resins.

As described above, according to the present invention, the fluoride ion concentration and/or the phosphate ion concentration of the wastewater can be surely reduced to the aimed levels by adding the calcium-containing compound to the wastewater containing fluoride ion and/or phosphate ion to form sparingly soluble calcium salts, and then adding the agent A and the agent B to the wastewater. The amounts of the agent A and the agent B to be used and the amount of the sludge produced can be reduced by removing the precipitate (sparingly soluble calcium salts) formed by adding the calcium-containing compound to the wastewater containing fluoride ion and/or phosphate ion prior to the addition of the agent A and the agent B.

The removal of the precipitate may be performed by known methods using a thickener, a filtration apparatus, etc. The precipitate formed by adding the calcium-containing compound necessarily contains a large amount of the calcium-containing compound. Therefore, the recovered precipitate is reusable as the calcium-containing compound for forming the precipitate. Since the separated precipitate can be reused in the present invention, the amount of sludge to be produced is reduced. In addition, since the removal of the precipitate eliminates the dissociation of fluoride ion and/or phosphate ion from the precipitate, the addition amount of the agent A can be reduced in about half as will be clearly seen from the comparison between Examples 3-8 with Examples 9-14.

The present invention will be described in more detail by reference to the following examples, but it should noted that these examples are not intended to limit the scope of the invention thereto.

### EXAMPLE 1

The wastewater from a desulfurizer for treating a combustion exhaust gas from a coal thermal power plant was treated. The combustion exhaust gas from the coal thermal power plant contained soot and dust, nitrogen oxides, sulfur dioxide, fluorine compounds, etc.

The soot and dust was removed by a dust precipitator, nitrogen oxides were made innocuous by a denitrizer, and the sulfur dioxide was removed by a desulfurizer. However, fluoride ion remained in a concentration of about 15 mg/L in the desulfurized absorbing water and was contained in the wastewater.

This type of wastewater has been conventionally subjected to secondary treatment using magnesium hydroxide, but failing to reduce the fluoride ion concentration to 8 mg/L or lower.

An exhaust gas having nitrogen oxides removed by a denitrizer was introduced into a wet desulfurizer where the gas was sprayed with a limestone slurry prepared by mixing a powdery limestone and water to absorb sulfur oxides in the exhaust gas. The absorbing solution was subjected to gypsum removal in a thickener and an overflow water (desulfurized wastewater) was treated by the method of the present invention.

The desulfurized wastewater had a pH of 7.0 and contained suspended matter at 75 mg/L, fluoride ion at 11 mg/L, calcium ion at 1,300 mg/L and sulfuric acid group at 2,000 mg/L.

Into 200 g of the desulfurized wastewater after gypsum was separated out, was mixed 3 g of 0.5% by weight aqueous solution (Solution A) of a film-forming agent comprising a 1:1 mixture (by weight) of a sodium alginate produced by the block-polymerization of mannuronic acid (M) and glucuronic acid (G) (M/G ≤ 1.5) and a partially hydrolyzed polyacrylamide (anionic polymeric flocculant: A-117). Upon adjusting the pH to 7.0 by adding 1.0 g of a 5% by weight aqueous solution (Solution B) of a complexing agent comprising a 17:1 mixture (by weight) of aluminum sulfate (in terms of its anhydride) and a cationic polymeric flocculant (C-508), suspended matters (flocks) were formed. The flocks were filtered off to obtain a colorless transparent treated water. The fluoride ion concentration of the treated water measured by an ion electrode method was 2.0 mg/L.

### EXAMPLE 2

The overflow water (desulfurized wastewater) used in Example 1 was further mixed with 0.05 g of slaked lime to adjust the pH to 8.5. Upon adding 3 g of Solution A used in Example 1 and then 1.5 g of Solution B, flocks were formed in the water, which was then filtered to remove the flocks to obtain a colorless transparent treated water. The treated water had a pH of 6.9 and a fluoride ion concentration of 0.2 mg/L.

### EXAMPLES 3-8

A waste chemical polishing solution containing fluorine from a stainless steel production process was treated. Into 200 g of waste solution of a fluorine-containing replenishing solution for continuous chemical polishing (chemical polishing agent for stainless steel "CPL200" available from Mitsubishi Gas Chemical Company, Inc.), was added 0.5 to 1.1 g of slaked lime to adjust the pH respectively to 4.9 to 11.3. The resultant precipitate was filtered off through a qualitative filter paper No. 2. Into the filtrate, was dissolved 0.1 g of a film-forming agent (Agent A) comprising a 1:1 mixture (by weight) of a sodium alginate produced by the block-polymerization of mannuronic acid (M) and glucuronic acid (G) (M/G ≤ 1.5) and a partially hydrolyzed polyacrylamide (anionic polymeric flocculant: A-118) under stirring. Then, a predetermined amount of a 10% by weight aqueous solution of a complexing agent (Agent B) comprising a 17:1 mixture (by weight) of aluminum sulfate (in terms of its anhydride) and a cationic polymeric flocculant (C-508) was further added. The resultant flocks were filtered off to obtain a treated water, which was measured for pH by a pH meter and fluoride ion concentration by an ion electrode (available from Toa DKK Co., Ltd.). The results are shown in Table 1.

**Table 1**

| | Examples | | | | | |
|---|---|---|---|---|---|---|
| | 3 | 4 | 5 | 6 | 7 | 8 |
| Fluoride ion concentration of wastewater (mg/L) | 390 | 390 | 780 | 780 | 780 | 780 |
| | | | | | | |
| Amount of slaked lime added (g) | 0.8 | 1.1 | 0.5 | 0.7 | 0.9 | 1.0 |
| | | | | | | |
| pH after addition of slaked lime | 11.0 | 11.3 | 4.91 | 9.48 | 10.06 | 10.51 |
| | | | | | | |
| Amount of film-forming agent A added (g) | 0.1 | 0.1 | 0.1 | 0.1 | 0.1 | 0.1 |
| | | | | | | |
| Amount of complexing agent B added (g) | 0.21 | 0.46 | 0.97 | 1.02 | 0.88 | 0.90 |
| | | | | | | |
| pH of treated water after filtration | 5.8 | 7.3 | 3.7 | 5.8 | 7.0 | 6.6 |
| | | | | | | |
| Fluoride ion concentration of treated water (mg/L) | 0.02 | 0.96 | 3.50 | 3.00 | 1.63 | 0.025 |

### EXAMPLES 9-14

The same procedures as in Examples 3-8 were repeated except that the filtration for removing the precipitate was omitted and the amount of Agent A added was changed to 0.2 g. The results are shown in Table 2.

**Table 2**

| | Examples | | | | | |
|---|---|---|---|---|---|---|
| | 9 | 10 | 11 | 12 | 13 | 14 |
| Fluoride ion concentration of wastewater (mg/L) | 390 | 390 | 780 | 780 | 780 | 780 |
| | | | | | | |
| Amount of slaked lime added (g) | 0.8 | 1.1 | 0.5 | 0.7 | 0.9 | 1.0 |
| | | | | | | |
| pH after addition of slaked lime | 11.0 | 11.3 | 4.91 | 9.48 | 10.06 | 10.51 |
| | | | | | | |
| Amount of film-forming agent A added (g) | 0.2 | 0.2 | 0.2 | 0.2 | 0.2 | 0.2 |
| | | | | | | |
| Amount of complexing agent B added (g) | 0.2 | 0.46 | 0.97 | 1.02 | 0.88 | 0.90 |
| | | | | | | |
| pH of treated water after filtration | 5.8 | 7.3 | 3.7 | 5.8 | 7.0 | 6.6 |
| | | | | | | |
| Fluoride ion concentration of treated water (mg/L) | 0.02 | 0.96 | 3.50 | 3.00 | 1.63 | 0.028 |

Form the results of Tables 1 and 2, it was confirmed that the fluoride ion concentration of the waste chemical polishing solution was reduced to 3 mg/L or lower by the treatment according to the present invention, irrespective of the initial fluoride ion concentrations, and further confirmed that the removal of the precipitate by filtration in advance cut the addition amount of Agent A by about half.

### EXAMPLE 15

Into 250 g of the non-treated wastewater shown in Table 3, 0.3 g of slaked lime was added to adjust the pH to 10.8. Then, the excess of the slaked lime was filtered off through a qualitative filter paper No. 2. After dissolving 0.2 g of Agent A used in Example 3 under stirring, 0.6 g of Agent B used in Example 3 was dissolved in the filtrate, and the flocks formed were filtered off. The results of analysis on the treated wastewater are shown in Table 3.

### COMPARATIVE EXAMPLE 1

After making the non-treated wastewater shown in Table 3 alkaline with 0.04% of sodium hydroxide, the pH was adjusted to 7.3 with 0.08% of a chelating agent to remove mainly Ni ion and Zn ion. After adding 0.25% of a slaked lime slurry, the pH was adjusted to 7.3 with 0.38% of iron(II) sulfate and then to 7.0 with 0.25% of an anionic flocculant, and the flocks formed were filtered off. The results of analysis on the treated wastewater are shown in Table 3.

### COMPARATIVE EXAMPLE 2

The same procedure as in Example 9 was repeated except that only Agent B was added without adding Agent A. The results of analysis on the treated wastewater are shown in Table 3.

As seen from Table 3, fluoride ion and phosphate ion were effectively removed by the method of the present invention in which Agent A and Agent B agents were combinedly used.

**Table 3**

| | Non-treated wastewater | Example | Comparative Examples | |
|---|---|---|---|---|
| | | 15 | 1 | 2 |
| Total phosphate ion concentration (mg/L) | 65 | 0.1 | 1.0 | 0.4 |
| | | | | |
| Fluoride ion concentration (mg/L) | 7.2 | 2.3 | 7.1 | 5.0 |

### INDUSTRIAL APPLICABILITY

According to the present invention, fluoride ion and/or phosphate ion in the wastewater are treated with calcium to convert into sparingly soluble salts, and fluoride ion and/or phosphate ion dissociated from the salts are completely trapped. As a result, the fluoride ion concentration and the phosphate ion concentration of the wastewater are surely reduced to the aimed levels in inexpensive facilities without using specific means such as ion exchange resins.

## Claims

1. A method for treating a wastewater containing fluoride ion and/or phosphate ion, comprising:
adding a calcium-containing compound to the wastewater;
adding (A) a film-forming agent comprising a water-soluble organic polyelectrolyte and an anionic polymeric flocculant to the wastewater, the water-soluble organic polyelectrolyte being constituted by units derived from at least one organic acid selected from the group consisting of mannuronic acid, glucuronic acid and cellulose glycolic acid; and
adding, as a complexing agent, (B) a cationic polymeric flocculant solely, or a water-soluble aluminum salt and the cationic polymeric flocculant sequentially or simultaneously to the wastewater.

2. A method for treating a wastewater containing fluoride ion and/or phosphate ion, comprising:
adding a calcium-containing compound to the wastewater to form a precipitate;
removing the precipitate from the wastewater;
adding (A) a film-forming agent comprising a water-soluble organic polyelectrolyte and an anionic polymeric flocculant to the wastewater, the water-soluble organic polyelectrolyte being constituted by units derived from at least one organic acid selected from the group consisting of mannuronic acid, glucuronic acid and cellulose glycolic acid; and
adding, as a complexing agent, (B) a cationic polymeric flocculant solely, or a water-soluble aluminum salt and the cationic polymeric flocculant sequentially or simultaneously to the wastewater.

3. The method according to Claim 1 or 2, wherein after adding the water-soluble aluminum salt solely, the cationic polymeric flocculant is added to the wastewater.

4. The method according to Claim 1 or 2, wherein after mixing the water-soluble aluminum salt and the cationic polymeric flocculant in advance, the resultant mixture is then added to the wastewater.

5. The method according to any one of Claims 1 to 4, wherein the anionic polymeric flocculant to be used as the film-forming agent A is a polymer comprising constitutional units represented by the following formulae I, II and III: 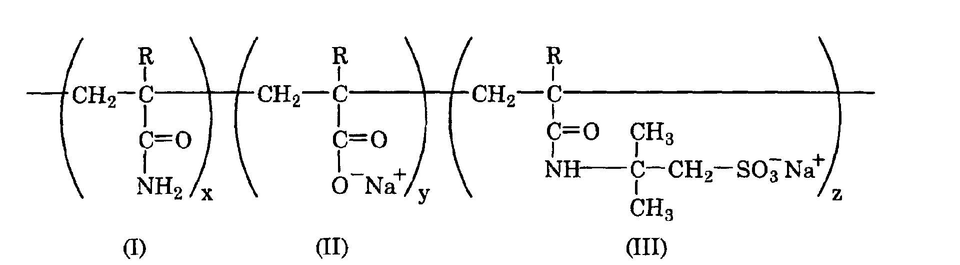 wherein x:y:z is 50:40:10 to 0:100:0 and R is hydrogen or methyl group.

6. The method according to any one of Claims 1 to 5, wherein the cationic polymeric flocculant to be used as the complexing agent B is a polymer comprising constitutional units represented by the following formulae IV and V: 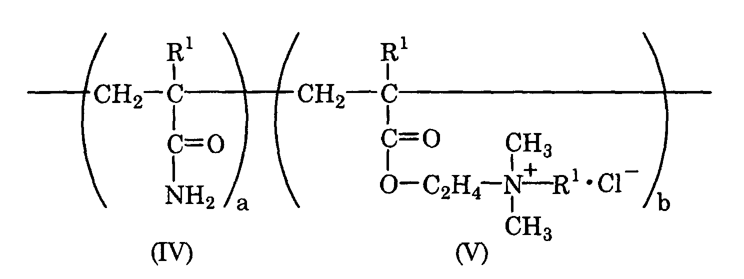 wherein a:b is 50:50 to 0:100 and R¹ is hydrogen or methyl group.
